# EUROPEAN PATENT APPLICATION

(11) **EP 2 112 637 A1**
(43) Date of publication of application: **28.10.2009**
(21) Application number: 09158431.8
(22) Date of filing: 22.04.2009
(51) Int. Cl.: G08B 13/196, H04N 5/247, H04N 7/18, G06T 7/00, G01S 3/786

(54) **Flow line tracing system and program storage medium for supporting flow line tracing system**

(30) Priority: 24.04.2008 JP 2008114336
(71) Applicant: Toshiba TEC Kabushiki Kaisha, Tokyo 141-8664 (JP)
(72) Inventor: Ikumi, Tomonori, Tokyo Tokyo 141-8664 (JP); Koiso, Takashi, Tokyo Tokyo 141-8664 (JP); Sekine, Naoki, Tokyo Tokyo 141-8664 (JP); Takahata, Masami, Tokyo Tokyo 141-8664 (JP)
(74) Representative: Uchida, Kenji

(57) **Abstract**

A flow line creation section (4) generates flow line data indicative of a trajectory of a customer moving in a monitored area. The generated flow line data is stored in a flow line database (6). A customer extraction section (5) extracts image data including the customer's face image from a video captured by a camera (CA7). The extracted image data is stored in a customer image database (8). A matching section (9) matches the flow line data stored in the flow line database (6) individually with the image data including the customer's face image corresponding to the flow line data, out of the image data stored in the customer image database (8). Data indicative of a correlation between the matched flow line data and image data is stored in a matching list database (10).

## Description

The present invention relates to a technique for tracing behaviors of customers in a store, such as a convenience store or supermarket, as flow lines.

A system that uses flow lines is disclosed in Jpn. Pat. Appln. KOKAI No. 2006-350751, as a system for tracing behaviors of customers moving in a store.

This system detects a customer's head from videos captured with cameras and locates a position in a real space, based on the position of the detected head on a two-dimensional image. In order to locate the position of the customer with high accuracy, the customer's head must be captured with a plurality of cameras. Thus, the system requires a lot of cameras that can cover every corner of the store.

The cameras include wide-angle cameras, such as ones with a fish-eye lens or omni-directional mirror, in addition to standard-lens cameras that are used as monitoring cameras or the like. The wide-angle cameras cannot be expected to ensure clear images, because of their deflections greater than those of the standard-lens versions. Since the wide-angle cameras have wider angles of view, however, their image capture areas are wider. In general, therefore, a system for tracing customers' behaviors by means of flow lines uses wide-angle cameras in order to reduce the number of cameras.

In recent years, shoplifting is a significant problem for stores, such as convenience stores, supermarkets, etc. Accordingly, monitoring cameras as measures to prevent shoplifting offenses are installed at important points in increasing stores. However, standard-lens cameras that are generally used as monitoring cameras have only small angles of view, although they can produce clear images. Therefore, blind spots are created in the stores, inevitably.

In constructing the system for tracing customers' behaviors as flow lines, on the other hand, the customers staying in the store must be continuously captured unless they leave the store. Thus, shoplifting can be effectively prevented if shoplifters can be identified by using this flow line tracing system.

Based on images captured by the wide-angle cameras used for flow line creation, the conventional system may be able to determine whether or not a customer has committed an illegal act. Due to the unclearness of the images, however, it is very difficult to identify the customer by means of the system.

The object of the present invention is to provide a flow line tracing system capable of identifying customers whose behaviors in a store are traced as flow lines.

According to an aspect of the invention, a flow line tracing system comprises flow line generating means for generating flow line data indicative of a trajectory of a customer moving in a monitored area, flow line storage means for storing the flow line data generated by the flow line generating means, image extraction means for extracting image data including the customer's face image from a video captured by a camera disposed so as to capture an image of the customer in a predetermined position within the monitored area, image storage means for storing the image data extracted by the image extraction means, matching means for matching the flow line data stored in the flow line storage means individually with the image data including the customer's face image corresponding to the flow line data, out of the image data stored in the image storage means, and matching storage means for storing data indicative of a correlation between the flow line data and the image data matched by the matching means.

The invention can be more fully understood from the following detailed description when taken in conjunction with the accompanying drawings, in which:
FIG. 1 is a block diagram showing a configuration of a flow line tracing system according to an embodiment of the invention;
FIG. 2 is a plan view showing a sales area of a store to which the embodiment is applied;
FIG. 3 is a data configuration diagram of a flow line database shown in FIG. 1;
FIG. 4 is a data configuration diagram of a customer image database shown in FIG. 1;
FIG. 5 is a data configuration diagram of a matching list database shown in FIG. 1;
FIG. 6 is a flowchart showing a procedure of information processing by a customer extraction section shown in FIG. 1;
FIG. 7 is a flowchart showing a procedure of information processing by a matching section shown in FIG. 1;
FIG. 8 is a flowchart showing a procedure of information processing by an analysis section shown in FIG. 1;
FIG. 9 is a diagram showing an example of a flow line analysis screen displayed based on the processing by the analysis section according to the embodiment; and
FIG. 10 is a flowchart showing another procedure of information processing by the analysis section shown in FIG. 1.

According to an embodiment of the present invention, a sales area of a convenience store or the like is supposed to be a monitored area. The present invention is applied to a flow line tracing system, which traces trajectories of customers moving in the monitored area as flow lines.

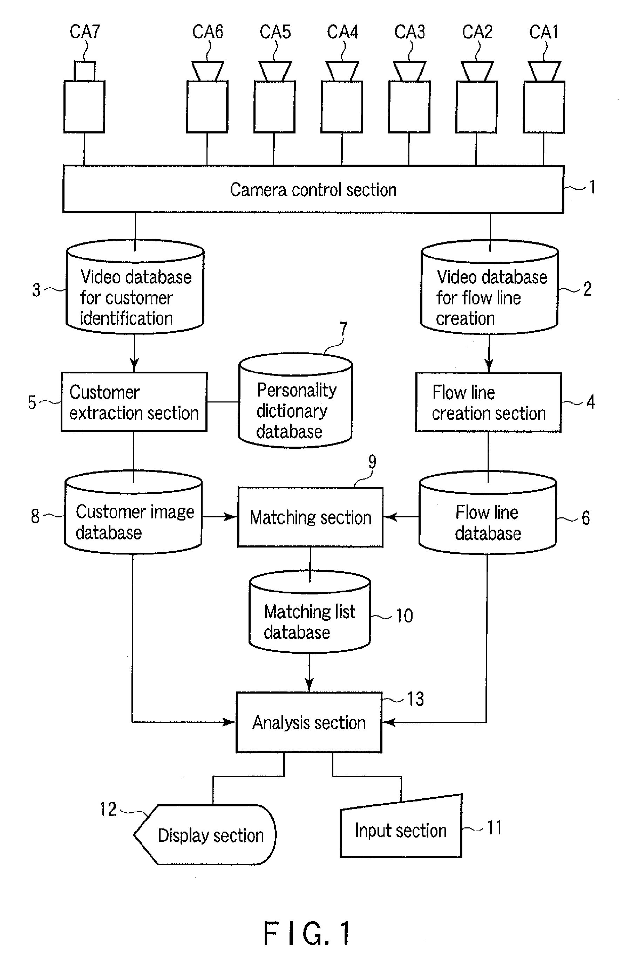

First, a configuration of the flow line tracing system is shown in the block diagram of FIG. 1. This system is provided with a plurality of (six as illustrated) flow line cameras CA1 to CA6 and one monitoring camera CA7. Each of the flow line cameras CA1 to CA6 is a wide-angle camera, such as one with a fish-eye lens or omni-directional mirror. The monitoring camera CA7 is a camera with a standard lens.

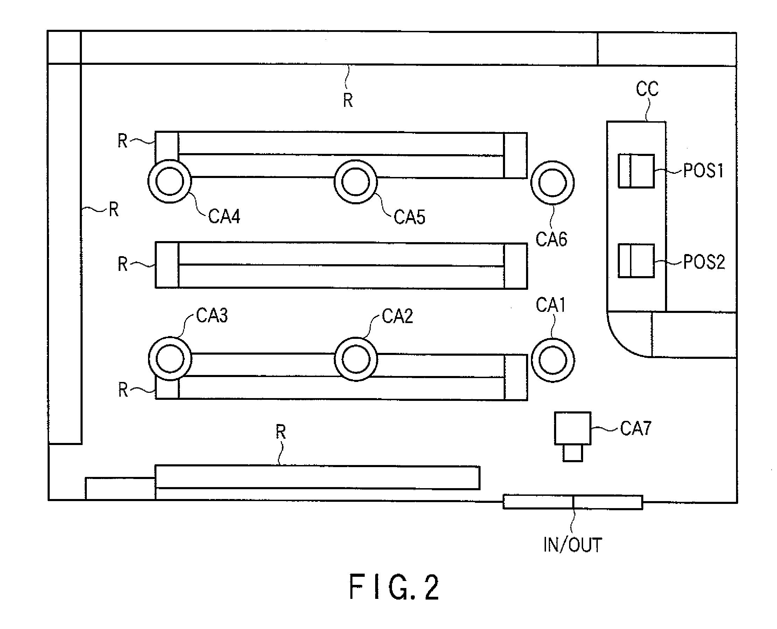

As shown in FIG. 2, the flow line cameras CA1 to CA6 are arranged at predetermined intervals at a ceiling portion of the sales area. The cameras CA1 to CA6 are used to trace the trajectories of the customers who move in the sales area by silhouette volume intersection. The silhouette volume intersection is a method in which the head, for example, of each customer is captured in a plurality of directions and the coordinate values of the head in a three-dimensional coordinate system suitably set in an in-store space are calculated from imaged head positions. Also in consideration of influences of shielding by household goods, POPs, etc., in the store, a designer of the system settles locations of the flow line cameras CA1 to CA6 so that the entire area of the store can be captured. In order to improve the accuracy of position detection by the silhouette volume intersection method, the entire store area should preferably be captured by using at least three cameras.

By means of the flow line cameras CA1 to CA6 set in this manner, the present system can trace the trajectories of the customers moving in the monitored area, that is, sales area, as flow lines. Since some of behaviors of customers who have picked up articles from shelves can be captured, moreover, the system can detect illegal acts, such as shoplifting offenses. Since the flow line cameras CA1 to CA6 are wide-angle cameras, however, obtained images are subject to substantial deflections at their peripheral portions, in particular. It is difficult, therefore, to identify a specific customer by captured images. Thus, even if a customer's illegal act is captured, the customer cannot be identified, so that the captured images are not very significant for crime prevention.

In the present system, therefore, the monitoring camera CA7 with a standard lens is used as second image capture means, in addition to the flow line cameras CA1 to CA6 as first image capture means. As shown in FIG. 2, the monitoring camera CA7 is set in a position where it can capture images of the faces of customers who enter the store through an entrance/exit IN/OUT.

The present system can identify a customer who is determined to have committed an illegal act by correlatively storing images including the customer's face images captured by the monitoring camera CA7 and a flow line of the customer traced based on images captured by the flow line cameras CA1 to CA6. Whether or not the customer has committed an illegal act may be determined or estimated from the images captured by the flow line cameras CA1 to CA6 or features of the flow line.

As shown in FIG. 2, two point-of-sales (POS) terminals POS1 and POS2 are set on a checkout counter CC.

Returning to FIG. 1, there is shown a camera control section 1 to which all of the flow line cameras CA1 to CA6 and the monitoring camera CA7 are connected. The control section 1 has a timer function therein and serves to synchronously control the cameras CA1 to CA7 for image capture timing such that, for example, ten frames are captured every second. The control section 1 adds image capture date/time data to data on the images captured by the flow line cameras CA1 to CA6 and successively loads the image data into a video database 2 for flow line creation. Further, the control section 1 adds image capture date/time data to the images captured by the monitoring camera CA7 and successively loads the image data into a video database 3 for customer identification.

The flow line tracing system is provided with a flow line creation section 4 and customer extraction section 5. Based on the image data from the flow line cameras CA1 to CA6, stored in the video database 2 for flow line creation, the flow line creation section 4 traces, by the conventional silhouette volume intersection method, the trajectories of the customers who enter and exit the store, and generates flow line data for each customer. Then, the flow line data created for each customer is additively given its intrinsic flow line ID and loaded into a flow line database 6.

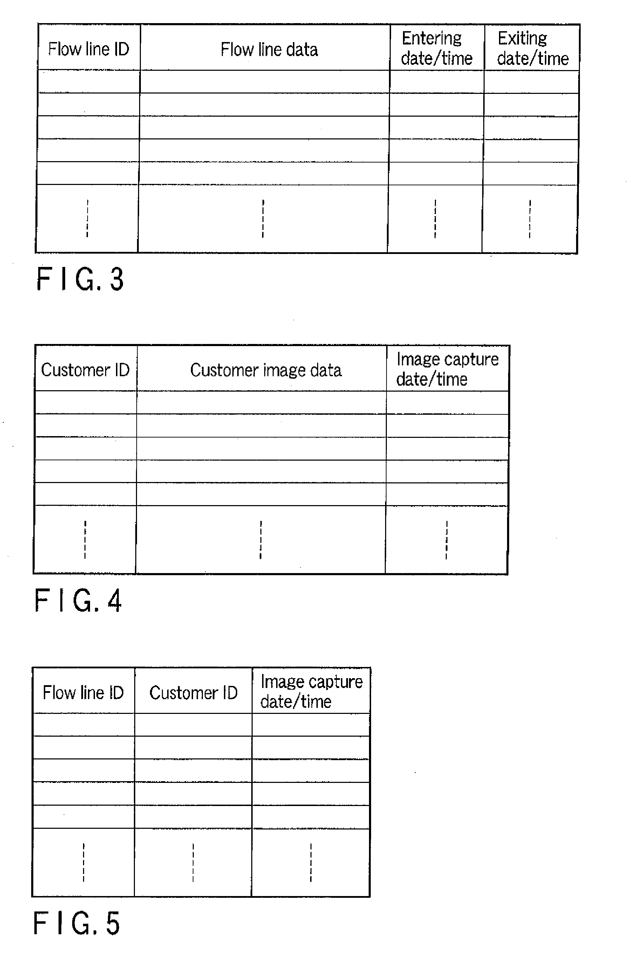

FIG. 3 shows an example of the data structure of the flow line database 6. As shown in FIG. 3, the flow line database 6 is stored with the flow line data generated for each customer in the flow line creation section 4, together with a flow line ID, entering date/time data, and exiting date/time data. The entering date/time data is the date/time when a customer with the flow line data concerned entered the store through the entrance/exit IN/OUT. In other words, the entering date/time data is the date/time of image capture by the flow line cameras CA1 to CA6 when coordinate values in the three-dimensional coordinate system that indicate a starting point of the flow line data were calculated. The exiting date/time data is the date/time when the customer with the flow line data concerned exited the store through the entrance/exit IN/OUT. In other words, the exiting date/time data is the date/time of image capture by the flow line cameras CA1 to CA6 when coordinate values in the three-dimensional coordinate system that indicate an end point of the flow line data were calculated.

The flow line creation section 4 constitutes flow line generating means. The flow line database 6 constitutes flow line storage means, or more specifically, means for storing each flow line data together with data on the time when the customer corresponding to the flow line data is located in a predetermined position (near the entrance/exit) within the monitored area.

Based on the image data from the monitoring camera CA7 stored in the video database 3 for customer identification, the customer extraction section 5 extracts images of customers (including faces) having entered the store with reference to a personality dictionary database 7. Then, the extraction section 5 attaches an intrinsic customer ID to the extracted image data and loads the data into a customer image database 8.

FIG. 4 shows an example of the data structure of the customer image database 8. As shown in FIG. 4, the customer image database 8 is stored with the images of the customers (including faces) extracted in the customer extraction section 5, together with the customer ID and image capture date/time data. The image capture date/time data is the date/time when the image is captured by the monitoring camera CA7.

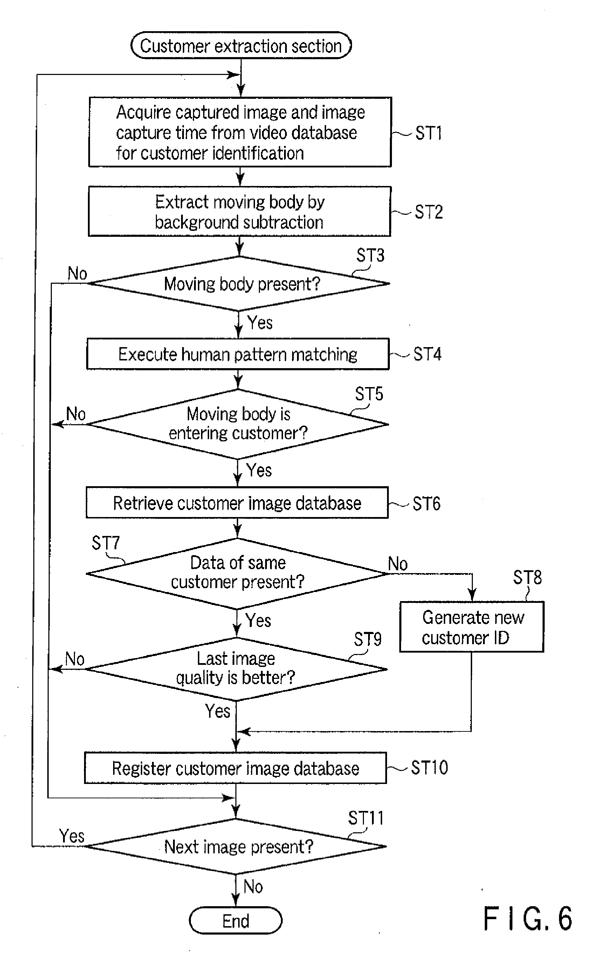

A procedure of information processing executed in the customer extraction section 5 will now be described with reference to the flowchart of FIG. 6. First, the extraction section 5 acquires the captured image data and the image capture date/time data attached thereto from the video database 3 for customer identification (Step ST1).

Then, the customer extraction section 5 extracts only moving bodies that move in the image by a conventional method, such as the background subtraction method (Step ST2). The monitoring camera CA7 captures an image of regions near the entrance/exit IN/OUT of the store. Except for a door being opened and closed and people and vehicles passing by outside, therefore, those customers who enter or exit the store are all of moving subjects in the captured images. No customers can appear in motionless parts of the images. Thus, in Step ST2, the customer extraction section 5 can reduce the amount of subsequent arithmetic operations by extracting only those parts corresponding to moving bodies from the captured images by using the background subtraction method.

If no moving body can be extracted from the captured image (NO in Step ST3), the customer extraction section 5 advances to Step ST11, which will be described later.

If a moving body can be extracted from the captured image (YES in Step ST3), the customer extraction section 5 selects customer images from the captured images by the conventional human pattern matching method (Step ST4). The human pattern matching method is carried out by comparing image data containing the extracted moving body with human image data stored in the personality dictionary database 7.

Customers having entered the store through the entrance/exit IN/OUT are opposed to the lens of the monitoring camera CA7. However, those customers who exit the store are not opposed to the camera lens, since they face backward. When the customers opposed to the lens of the monitoring camera CA7 are extracted as moving bodies from the captured images, the customers' faces appear in the captured images.

Thereupon, the personality dictionary database 7 stores the images of only the forwardly facing customers. If this is done, the customer extraction section 5 can discriminate captured images with the customers' faces therein, that is, images of the customers entering the store, from captured images without the customers' faces therein.

If the captured image is not an image of a customer entering the store (NO in Step ST5), the customer extraction section 5 advances to Step ST11.

If the captured image is an image of a customer entering the store (YES in Step ST5), the customer extraction section 5 retrieves the customer image database 8 and determines whether or not image data of the same customer is already registered in the database 8 (Step ST6). For example, the extraction section 5 checks and judges the position of the customer (face), shapes and colors of clothes, similarity of the face, etc., for each frame of the captured image.

If it is determined that no image data of the same customer is registered (NO in Step ST7), the customer extraction section 5 generates a new customer ID (Step ST8). Then, the extraction section 5 registers the customer image database 8 with the new customer ID, captured image data (customer image data), and image capture date/time data in correlation with one another (Step ST10). Thereafter, the extraction section 5 advances to Step ST11.

If it is determined that the image data of the same customer is already registered (YES in Step ST7), the customer extraction section 5 determines whether or not the quality of the last image is better than that of the previous one (Step ST9). For example, the extraction section 5 determines the image quality by comparing the last and previous images in face size, orientation, contrast, etc.

If the quality of the last image is better (YES in Step ST9), the customer extraction section 5 replaces the previous customer image data stored in the customer image database 8 with the last customer image data (Step ST10). If the quality of the previous customer image data is better (NO in Step ST9), the extraction section 5 does not execute Step ST10. Thereafter, the extraction section 5 advances to Step ST11. Thus, the extraction section 5 can obtain the best image by comparing images of the same customer and storing better images.

In Step ST11, the customer extraction section 5 determines whether or not the next captured image data is stored in the video database 3 for customer identification. If the next data is stored (YES in Step ST11), the extraction section 5 returns to Step ST1 and acquires the next captured image data and image capture date/time data attached thereto. Thereafter, Step ST2 and the subsequent steps are executed again.

Thus, the customer extraction section 5 executes Step ST2 and the subsequent steps in succession for all the captured image data stored in the video database 3 for customer identification. If it is then determined that no unprocessed captured image data is stored in the video database 3 (NO in Step ST11), the extraction section 5 terminates this procedure of information processing.

The customer extraction section 5 constitutes image extraction means. The customer image database 8 constitutes image storage means, or more specifically, means for storing each image data together with data on the time when the image is captured.

The flow line tracing system is provided with a matching section 9. The matching section 9 matches the flow line data stored in the flow line database 6 with the image data stored in the customer image database 8. Specifically, the matching section 9 matches the flow line data with image data including the face of the customer corresponding to the flow line data, that is, the customer whose trajectory is represented by the flow line reproduced from the flow line data. Then, the matching section 9 loads the correlation between the flow line data and image data into the matching list database 10.

FIG. 5 shows an example of the data structure of the matching list database 10. As shown in FIG. 5, the matching list database 10 is stored with flow line IDs for specifying the flow line data and customer IDs for specifying the image data matched with the flow line data, along with image capture date/time data.

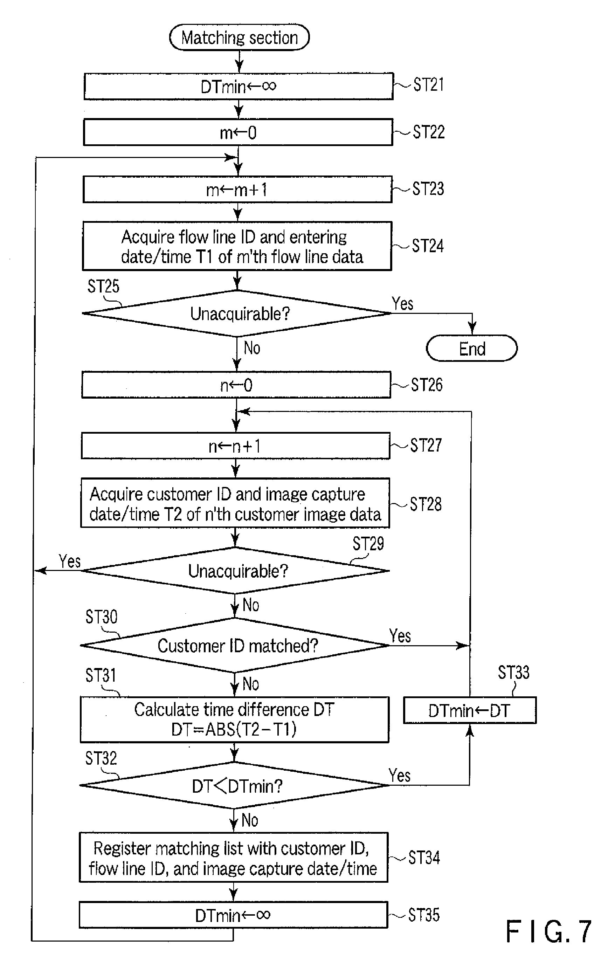

A procedure of information processing executed in the matching section 9 will now be described with reference to the flowchart of FIG. 7. First, the matching section 9 makes data DTmin in a minimum time difference memory infinite (Step ST21). Further, the matching section 9 resets data m in a flow line number counter to "0" (Step ST22).

Then, the matching section 9 counts up the flow line number counter by "1" (Step ST23). Subsequently, the matching section 9 acquires a flow line ID and entering date/time data T1 added to m-th leading flow line data (m is data of the flow line number counter) from the flow line database 6 (Step ST24).

If a number, m, of data or more are stored in the flow line database 6, the matching section 9 can acquire the flow line ID and entering date/time data T1 of the m-th flow line data. When the flow line ID and entering date/time data T1 are acquired (NO in Step ST25), the matching section 9 resets data n in an image number counter to "0" (Step ST26).

Then, the matching section 9 counts up the image number counter by "1" (Step ST27). Subsequently, the matching section 9 acquires a customer ID and image capture date/time data T2 added to n-th leading customer image data (n is data of the image number counter) from the customer image database 8

### (Step ST28).

If a number, n, of data or more are stored in the customer image database 8, the matching section 9 can acquire the customer ID and image capture date/time data T2 of the n-th customer image data. When the customer ID and entering date/time data T2 are acquired (NO in Step ST29), the matching section 9 retrieves the matching list database 10, in order to determine whether or not this customer ID is already registered in the matching list database 10 (Step ST30).

If the customer ID is not registered in the matching list database 10, the customer ID of the n-th customer image data is not matched with the flow line ID. In this case (NO in Step ST30), the matching section 9 calculates a time difference DT between the entering date/time data T1 of the m-th flow line data and the image capture date/time data T2 of the n-th customer image data. Specifically, the matching section 9 calculates an absolute value ABS (T2 - T1) of the difference between the entering date/time data T1 and image capture date/time data T2.

The matching section 9 compares the time difference DT with the data DTmin in the minimum time difference memory (Step ST32). If the time difference DT is founded to be smaller than the data DTmin as a result of this comparison (YES in Step ST32), the matching section 9 updates the data DTmin in the minimum time difference memory to the last calculated time difference DT (Step ST33). Thereafter, the matching section 9 returns to Step ST27.

If the customer ID of the n-th customer image data is registered in the matching list database 10, it is already matched with the flow line ID. In this case (YES in Step ST30), the matching section 9 returns to Step ST27 without performing Step ST31 and the subsequent steps.

The matching section 9 repeatedly executes Steps ST27 to ST33 so that the time difference DT reaches the data DTmin. If the customer ID and image capture date/time data T2 of the n-th customer image data cannot be acquired before the time difference DT reaches the data Dtmin (YES in Step ST29), the matching section 9 returns to Step ST23.

When the time difference DT reaches the data DTmin (NO in Step ST32), the matching section 9 correlates the flow line ID of the m-th leading flow line data with the customer ID and image capture date/time data of the n-th customer image data and registers the data into the matching list database 10 (Step ST35). Further, the matching section 9 makes the data DTmin in the minimum time difference memory infinite again (Step ST35). Thereafter, the matching section 9 returns to Step ST23.

Each time the m-th flow line data is acquired from the flow line database 6, the matching section 9 repeatedly executes Step ST26 and the subsequent steps. If the m-th flow line data cannot be acquired (YES in Step ST25), the matching section 9 terminates this procedure of information processing.

Thus, each flow line data stored in the flow line database 6 is matched with data, out of the customer image data stored in the customer image database 8, such that the difference between their respective time data is the smallest. Then, the flow line ID of each flow line data and the customer image data matched with the flow line data, along with the image capture date/time data, are registered into the matching list database 10. The date/time data registered in the matching list database 10 may be entering date/time data corresponding to the flow line ID in place of the image capture date/time data.

The matching section 9 constitutes matching means. The matching list database 10 constitutes matching storage means, or more specifically, means for storing the correlation between flow line data and image data such that the difference between their respective time data is the smallest.

The flow line tracing system is provided with an input section 11, display section 12, and analysis section 13. For example, the input section 11 is a keyboard or pointing device, and the display section 12 is a liquid crystal display, CRT display, or the like. The analysis section 13 causes flow lines and customer images matched therewith to be displayed in the display section 12, based on data input through the input section 11.

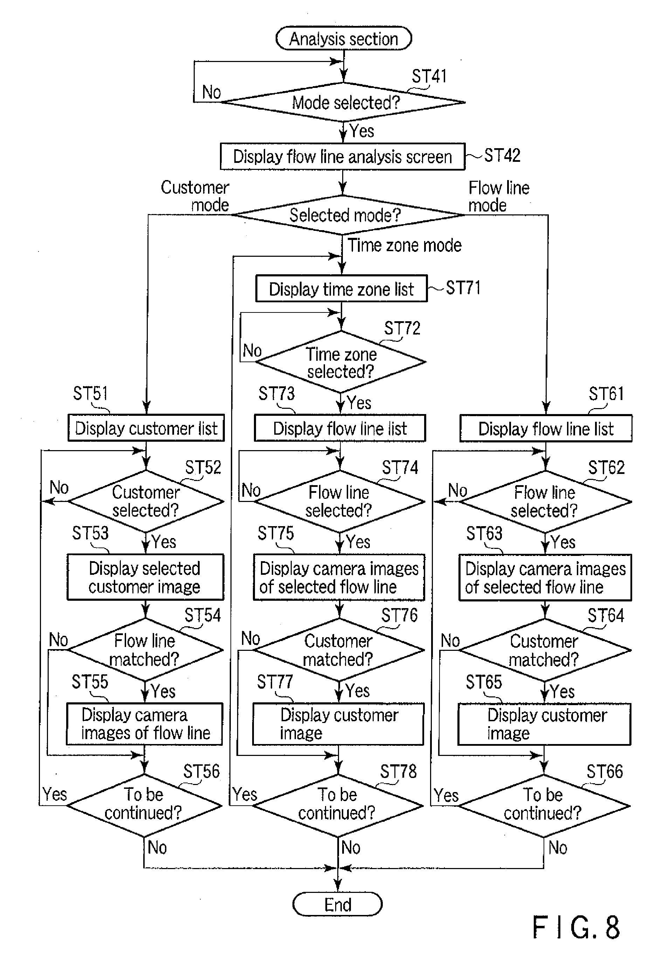

A procedure of information processing executed in the analysis section 13 will now be described with reference to the flowchart of FIG. 8. The analysis section 13 awaits the selection of one of operating modes (Step ST41). The operating modes include a customer mode, flow line mode, and time zone mode. If any of the operating modes is selected through the input section 11 (YES in Step ST41), the analysis section 13 causes the display section 12 to display a flow line analysis screen 20 (Step ST42).

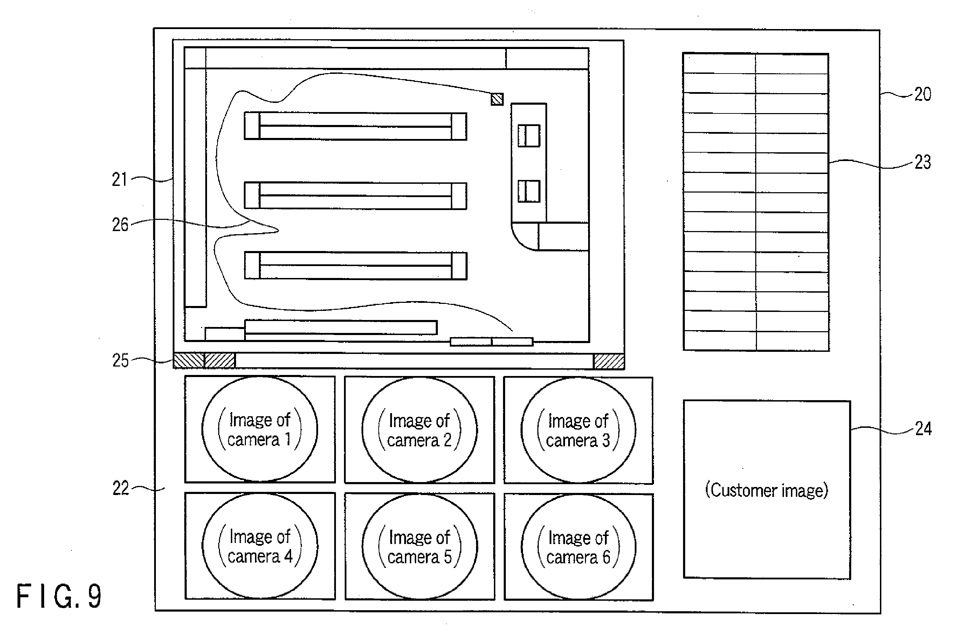

FIG. 9 shows an example of the flow line analysis screen 20. As shown in FIG. 9, the flow line analysis screen 20 is divided into a flow line display area 21, camera image display area 22, list display area 23, and customer image display area 24.

The flow line display area 21 displays a map of an in-store sales area. This area 21 is provided with a scroll bar 25. The scroll bar 25 is synchronized with the image capture time of each of the flow line cameras CA1 to CA6. If an operator slides the scroll bar 25 from the left end to the right end of the screen, the image capture time elapses. Thereupon, customer flow lines 26 detected from videos captured by the cameras CA1 to CA6 at each time are displayed superposed on the map.

The camera image display area 22 displays videos captured by the flow line cameras CA1 to CA6 at a time assigned by the scroll bar 25. As shown in FIG. 9, the area 22 can simultaneously display the videos obtained by the six flow line cameras CA1 to CA6, side by side. Also, the camera image display area 22 can enlargedly display the video or videos obtained by one or more of those flow line cameras.

The analysis section 13 identifies the type of the selected mode (Step ST43).

If the selected mode is the customer mode, the analysis section 13 successively reads customer IDs and image capture dates/times from the customer image database 8, starting from its first record. Then, the analysis section 13 causes a customer list, in which the read customer IDs and image capture dates/times are arranged in date/time sequence, to be displayed in the list display area 23 (Step ST51). Each displayed image capture date/time is composed of month, day, hour, and minute or of month, day, hour, minute, and second. The month and day may be omitted. The analysis section 13 awaits the selection of any of the customer IDs from the customer list (Step ST52).

If any of the customer IDs is selected through the input section 11 (YES in Step ST52), the analysis section 13 retrieves the customer image database 8 in order to read customer image data corresponding to the selected customer ID. Then, based on the read customer image data, the analysis section 13 causes a customer image to be displayed in the customer image display area 24 (Step ST53).

In order to determine whether or not a flow line ID is matched with the selected customer ID, the analysis section 13 retrieves the matching list database 10 (Step ST54). If the flow line ID is matched (YES in Step ST54), the analysis section 13 retrieves the flow line database 6 in order to read flow line data corresponding to this flow line ID. Then, based on the read flow line data, the analysis section 13 causes a flow line to be displayed in the flow line display area 21. As this is done, the analysis section 13 extracts the image data of the flow line, obtained by the flow line cameras CA1 to CA6 during a time interval between entering and exiting times, from the video database 2 for flow line creation. Then, the analysis section 13 causes the videos captured by the flow line cameras CA1 to CA6 to be displayed in the camera image display area 22 in synchronism with the flow line displayed in the flow line display area 21 (Step ST55).

If the flow line ID is not matched (NO in Step ST54), the analysis section 13 does not execute Step ST55.

The analysis section 13 awaits a command for the continuation or termination of the processing (Step ST56). If a command for the continuation is given through the input section 11 (YES in Step ST56), the analysis section 13 returns to Step ST52. In other words, the analysis section 13 awaits the selection of the next customer ID. If a command for the termination is given through the input section 11 (NO in Step ST56), the analysis section 13 terminates this procedure of information processing.

If the selected mode is the flow line mode, the analysis section 13 successively reads flow line IDs and entering dates/times from the flow line database 6, starting from its first record. Then, the analysis section 13 causes a flow line list, in which the read flow line IDs and entering dates/times are arranged in date/time sequence, to be displayed in the list display area 23 (Step ST61). Each displayed entering date/time is composed of month, day, hour, and minute or of month, day, hour, minute, and second. The month and day may be omitted. The analysis section 13 awaits the selection of any of the flow line IDs from the flow line list (Step ST62).

If any of the flow line IDs is selected through the input section 11 (YES in Step ST62), the analysis section 13 retrieves the flow line database 6 in order to read flow line data corresponding to the selected flow line ID. Then, based on the read flow line data, the analysis section 13 causes a flow line to be displayed in the flow line display area 21. As this is done, the analysis section 13 extracts the image data of the flow line, obtained by the flow line cameras CA1 to CA6 during the time interval between the entering and exiting times, from the video database 2 for flow line creation. Then, the analysis section 13 causes the videos captured by the flow line cameras CA1 to CA6 to be displayed in the camera image display area 22 in synchronism with the flow line displayed in the flow line display area 21 (Step ST63).

In order to determine whether or not a customer ID is matched with the selected flow line ID, the analysis section 13 retrieves the matching list database 10 (Step ST64). If the customer ID is matched (YES in Step ST64), the analysis section 13 retrieves the customer image database 8 in order to read customer image data corresponding to this customer ID. Then, based on the read customer image data, the analysis section 13 causes a customer image to be displayed in the customer image display area 24 (Step ST65).

If the customer ID is not matched (NO in Step ST64), the analysis section 13 does not execute Step ST65.

The analysis section 13 awaits a command for the continuation or termination of the processing (Step ST66). If a command for the continuation is given through the input section 11 (YES in Step ST66), the analysis section 13 returns to Step ST62. In other words, the analysis section 13 awaits the selection of the next flow line ID. If a command for the termination is given through the input section 11 (NO in Step ST66), the analysis section 13 terminates this procedure of information processing.

If the selected mode is the time zone mode, the analysis section 13 causes a preset time zone list to be displayed in the list display area 23 (Step ST71). For example, a time zone is composed of 24 equal time zones (0:00 to 1:00, 1:00 to 2:00, 2:00 to 3:00, ... , 23:00 to 24:00) for each day. Each divided time zone is not limited to a time interval of one hour and may be a shorter interval, e.g., 30-minute interval. Alternatively, it may be a longer interval, e.g., 2-hour interval. After the time zone list is displayed, the analysis section 13 awaits the selection of any of the time zones (Step ST72).

If any of the time zones is selected from the time zone list through the input section 11 (YES in Step ST72), the analysis section 13 retrieves the flow line database 6 in order to read flow line IDs and entering dates/times of flow line data of which entering times are included in the selected time zone, out of flow line data of which entering times are 24 hours or less ahead of the current time. Then, the analysis section 13 causes a flow line list, in which the read flow line IDs and entering dates/times are arranged in entering time sequence, to be displayed in the list display area 23 (Step ST73). Each displayed entering date/time is composed of month, day, hour, and minute or of month, day, hour, minute, and second. The month and day may be omitted. The analysis section 13 awaits the selection of any of the flow line IDs from the flow line list (Step ST74).

If any of the flow line IDs is selected through the input section 11 (YES in Step ST74), the analysis section 13 retrieves the flow line database 6 in order to read flow line data corresponding to the selected flow line ID. Then, based on the read flow line data, the analysis section 13 causes a flow line to be displayed in the flow line display area 21. As this is done, the analysis section 13 extracts the image data of the flow line, obtained by the flow line cameras CA1 to CA6 during the time interval between the entering and exiting times, from the video database 2 for flow line creation. Then, the analysis section 13 causes the videos captured by the flow line cameras CA1 to CA6 to be displayed in the camera image display area 22 in synchronism with the flow line displayed in the flow line display area 21 (Step ST75).

In order to determine whether or not a customer ID is matched with the selected flow line ID, the analysis section 13 retrieves the matching list database 10 (Step ST76). If the customer ID is matched (YES in Step ST76), the analysis section 13 retrieves the customer image database 8 in order to read customer image data corresponding to this customer ID. Then, based on the read customer image data, the analysis section 13 causes a customer image to be displayed in the customer image display area 24 (Step ST77).

If the customer ID is not matched (NO in Step ST76), the analysis section 13 does not execute Step ST77.

The analysis section 13 awaits a command for the continuation or termination of the processing (Step ST78). If a command for the continuation is given through the input section 11 (YES in Step ST78), the analysis section 13 returns to Step ST71. In other words, the analysis section 13 causes the time zone list to be displayed in the list display area 23 and awaits the selection of the time zone. If a command for the termination is given through the input section 11 (NO in Step ST78), the analysis section 13 terminates this procedure of information processing.

In Step ST72, a date may be selected in addition to the time zone. If the date is selected, the analysis section 13 reads flow line IDs and entering times of customers having entered the store in the selected time zone, out of flow line data generated at the selected date. Then, the analysis section 13 causes a flow line list, in which the read flow line IDs and entering times are arranged in entering time sequence, to be displayed in the list display area 23.

The processing of Step ST51 by the analysis section 13 and the display section 12 constitute first list display means, that is, means for selectably displaying a list of the image data stored in the customer image database 8. The processing of Steps ST52 to ST54 by the analysis section 13 and the input section 11 constitute first data selection means, that is, means for selecting the flow line data matched with any of the image data selected from the list, out of the data stored in the matching list database 10, when the image data is selected. The processing of Step ST55 by the analysis section 13 and the display section 12 constitute first analysis display means, that is, means for displaying a flow line of the flow line data selected by the data selection means, together with a customer image of the image data selected from the list.

The processing of Step ST61 by the analysis section 13 and the display section 12 constitute second list display means, that is, means for selectably displaying a list of the flow line data stored in the flow line database 6. The processing of Steps ST62 to ST64 by the analysis section 13 and the input section 11 constitute second data selection means, that is, means for selecting the image data matched with any of the flow line data selected from the list, out of the data stored in the matching list database 10, when the flow line data is selected. The processing of Step ST65 by the analysis section 13 and the display section 12 constitute second analysis display means, that is, means for displaying a customer image of the image data selected by the data selection means, together with a flow line of the flow line data selected from the list.

The processing of Steps ST71 and ST72 by the analysis section 13 and the input section 11 constitute time zone acceptance means, that is, means for accepting assigned input of a time zone. The processing of Step ST73 by the analysis section 13 and the display section 12 constitute third list display means, that is, means for displaying a list of the flow line data stored together with the time data on the time zone assigned by the time zone acceptance means. The processing of Steps ST74 to ST76 by the analysis section 13 and the input section 11 constitute third data selection means, that is, means for selecting the image data matched with any of the flow line data selected from the list, out of the data stored in the matching list database 10, when the flow line data is selected. The processing of Step ST77 by the analysis section 13 and the display section 12 constitute third analysis display means, that is, means for displaying a customer image of the image data selected by the data selection means, together with a flow line of the flow line data selected from the list.

If the operator selects, for example, the flow line mode, the list of the flow line data is displayed in the list display area 23 of the flow line analysis screen 20. If the operator then selects an arbitrary flow line ID, a flow line of flow line data specified by this flow line ID is displayed in the flow line display area 21 of the flow line analysis screen 20. In synchronism with the movement of this flow line, moreover, the videos captured by the flow line cameras CA1 to CA6 are displayed in the camera image display area 22 of the flow line analysis screen 20. If a customer ID is matched with this flow line ID, a face image of a customer specified by this customer ID is displayed in the customer image display area 24 of the flow line analysis screen 20.

Thereupon, the operator determines whether or not the customer has committed an illegal act, such as a shoplifting offense, based on the movement of the flow line displayed on the flow line analysis screen 20 or a camera image for generating this flow line. If an illegal act is supposed to have been committed, the operator recognizes the customer's face from the customer image displayed on the flow line analysis screen 20.

Thus, according to the flow line tracing system of the present embodiment, if a customer whose behavior is being traced as a flow line commits an illegal act, the operator can easily identify the customer by the face image.

This effect can also be obtained by selecting the customer mode as the operating mode. If the operator selects the customer mode, a list of the customer IDs is displayed in the list display area 23. If the operator then selects an arbitrary customer ID, a face image of customer image data specified by this customer ID is displayed in the customer image display area 24. If a flow line ID is matched with this customer ID, moreover, a flow line of flow line data specified by this flow line ID is displayed in the flow line display area 21. Further, the videos captured by the flow line cameras CA1 to CA6 in synchronism with this flow line are displayed in the camera image display area 22.

If an illegal act can be supposed to have been committed, based on the movement of the flow line or the camera image, therefore, the operator can easily identify the customer by the customer's face image.

In the customer mode, a list of face images generated based on image data corresponding to the list of the customer IDs may be displayed in place of the customer ID list. By doing this, the operator can recognize from the list, for example, that a customer having once committed an illegal act or acts is in the store. In this case, the operator selects images of this customer. Thereupon, the last behavior of this customer in the store is displayed as a flow line, so that the operator can determine whether or not the customer has refrained from committing another illegal act.

If the time zone in which an illegal act, such as a shoplifting offense, has been committed can be specified, moreover, the operator selects the time zone mode. If this is done, the time zone list is displayed in the list display area 23, so that the operator selects the time zone in which the illegal act is committed. Thereupon, a list of flow line IDs of customers having entered the store during this time zone is displayed, so that the operator selects an arbitrary flow line ID. As a result, the same operation as in the flow line mode is performed. Thus, the operator can easily specify the customer who is supposed to have committed an illegal act, such as a shoplifting offense.

If the time zone mode is selected, the number of flow line IDs on the list becomes smaller than in the case where the flow line mode is selected. Thus, time and labor required for specifying illegal customers can be reduced.

This embodiment can also be realized by using programs to construct the flow line creation section 4, customer extraction section 5, matching section 9, and analysis section 13 in a personal computer that is mounted with the camera control section 1. In this case, the programs may be downloaded from the network to the computer, or similar programs stored in a storage medium may be installed into the computer. The storage medium may be a CD-ROM or any other suitable medium that can store programs and be read by the computer. Further, the functions that are previously installed or downloaded may be fulfilled in cooperation with an operating system in the computer.

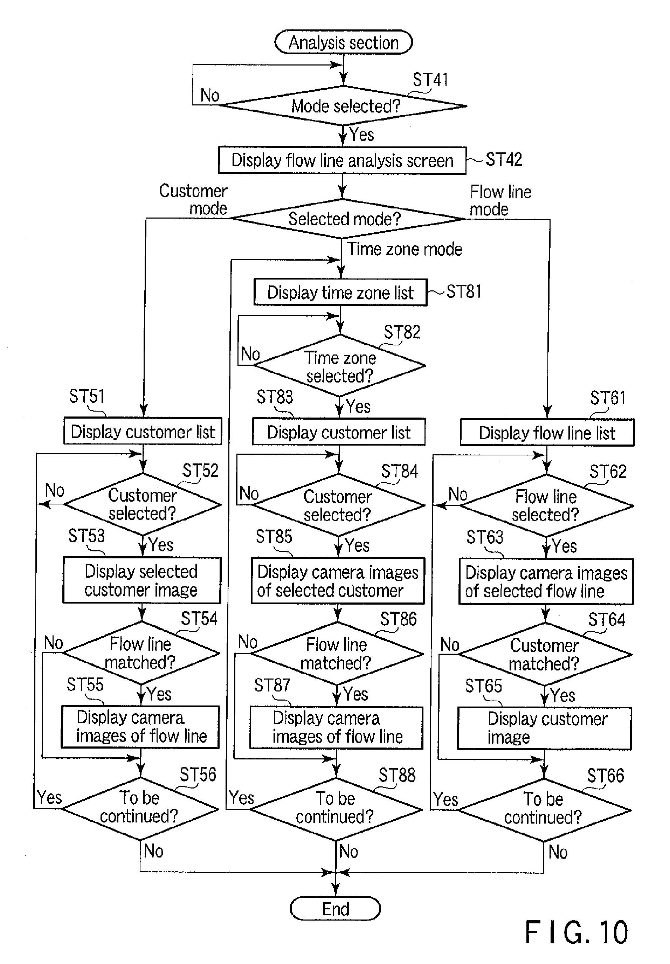

According to the invention the processing procedure of the analysis section 13 in the time zone mode may be modified in the manner shown in the flowchart of FIG. 10.

Specifically, after the time zone list is displayed (Step ST81), the analysis section 13 awaits the selection of any of the time zones (Step ST82). If any of the time zones is selected (YES in Step ST82), the analysis section 13 retrieves the customer image database 8 in order to read customer IDs and image capture dates/times of customer image data of which image capture times are included in the selected time zone, out of customer image data of which image capture dates/times are 24 hours or less ahead of the current time. Then, the analysis section 13 causes a flow line list, in which the read customer IDs and image capture dates/times are arranged in image capture time sequence, to be displayed in the list display area 23 (Step ST83). Thereafter, the analysis section 13 executes processing similar to Steps ST52 to ST56 in the customer mode, in Steps ST84 to ST88.

In this alternative embodiment, the number of customer IDs on the list is smaller than in the case of the customer mode. Therefore, the second embodiment can also produce an effect that time and labor required for specifying illegal customers can be reduced.

According to the present invention, a recording server may be provided in place of the video database 3 for customer identification. In this case, the customer extraction section 5 acquires videos recorded by the recording server on a real-time basis and extracts customer images.

In the present invention, the generation of flow lines is not limited to the method in which the flow lines are generated from videos captured by a plurality of wide-angle cameras. For example, flow lines may be generated by using standard-lens cameras in place of the wide-angle cameras. As described in, for example, Jpn. Pat. Appln. KOKAI No. 2006-236146, moreover, flow lines may be generated by tracing RFID tags carried by customers with RFID readers that are located in various corners of a store.

According to the present embodiment, flow line tracing programs are recorded in advance in an apparatus, as functions for carrying out the present invention. Alternatively, however, similar functions may be downloaded from the network to the apparatus, or similar programs stored in a storage medium may be installed into the apparatus. The storage medium may be a CD-ROM or any other suitable medium that can store programs and be read by the apparatus. Further, the functions that are previously installed or downloaded may be fulfilled in cooperation with an operating system or the like in the apparatus.

## Claims

1. A flow line tracing system **characterized by** comprising:
flow line generating means (4) for generating flow line data indicative of a trajectory of a customer moving in a monitored area;
flow line storage means (6) for storing the flow line data generated by the flow line generating means;
image extraction means (5) for extracting image data including the customer's face image from a video captured by a camera disposed so as to capture an image of the customer in a predetermined position within the monitored area;
image storage means (8) for storing the image data extracted by the image extraction means;
matching means (9) for matching the flow line data stored in the flow line storage means (6) individually with the image data including the customer's face image corresponding to the flow line data, out of the image data stored in the image storage means (8); and
matching storage means (10) for storing data indicative of a correlation between the flow line data and the image data matched by the matching means (9).

2. A flow line tracing system according to claim 1, **characterized by** further comprising list display means (12) for displaying a flow line list from which the flow line data stored in the flow line storage means (6) is selectable, data selection means (13) for selecting the image data matched with any of the flow line data selected from the flow line list, based on the data stored in the matching storage means (10), when the flow line data is selected, and analysis display means (12) for displaying a customer image of the image data selected by the data selection means (13), together with a flow line of the flow line data selected from the flow line list.

3. A flow line tracing system according to claim 1, **characterized by** further comprising list display means (12) for displaying an image list from which the image data stored in the image storage means (8) is selectable, data selection means (13) for selecting the flow line data matched with any of the image data selected from the image list, based on the data stored in the matching storage means (10), when the image data is selected, and analysis display means (12) for displaying a flow line of the flow line data selected by the data selection means (13), together with a customer image of the image data selected from the image list.

4. A flow line tracing system according to any one of claims 1 to 3, **characterized in that** the flow line storage means (6) stores each flow line data together with data on the time when the customer corresponding to the flow line data is located in a predetermined position within the monitored area, the image storage means (8) stores each image data together with data on the time when the image is captured, and the matching means (9) matches flow line data and image data such that the difference between the respective time data thereof is the smallest.

5. A flow line tracing system according to claim 4, **characterized by** further comprising time zone acceptance means (11) for accepting input of a time zone, list display means (12) for displaying a flow line list from which the flow line data stored together with the time data on the time zone of which the input is accepted by the time zone acceptance means (11) is selectable, data selection means (13) for selecting the image data matched with any of the flow line data selected from the flow line list, based on the data stored in the matching storage means (10), when the flow line data is selected, and analysis display means (12) for displaying a customer image of the image data selected by the data selection means (13), together with a flow line of the flow line data selected from the flow line list.

6. A flow line tracing system according to claim 4, **characterized by** further comprising time zone acceptance means (11) for accepting input of a time zone, list display means (12) for displaying an image list from which the image data stored together with the time data on the time zone of which the input is accepted by the time zone acceptance means (11) is selectable, data selection means (13) for selecting the image data matched with any of the image data selected from the image list, based on the data stored in the matching storage means (10), when the image data is selected, and analysis display means (12) for displaying a flow line of the flow line data selected by the data selection means (13), together with a customer image of the image data selected from the image list.
